# EUROPEAN PATENT SPECIFICATION

(11) **EP 3 037 904 B1**
(45) Date of publication and mention of the grant of the patent: **30.03.2022**
(21) Application number: 15188020.0
(22) Date of filing: 01.10.2015
(51) Int. Cl.: G05B 19/418

(54) **SIZING AND SELECTION CLOSER TO THE EXECUTING ENVIRONMENT**
DIMENSIONIERUNG UND AUSWAHL NÄHER AN DER AUSFÜHRUNGSUMGEBUNG
DIMENSIONNEMENT ET SÉLECTION PLUS PRÈS DE L'ENVIRONNEMENT D'EXÉCUTION

(30) Priority: 01.10.2014 US 201414504415
(43) Date of publication of application: 29.06.2016
(73) Proprietor: Rockwell Automation Technologies, Inc., Mayfield Heights, OH 44124 (US)
(72) Inventor: Maturana, Francisco, Lyndhurst, OH Ohio 44124 (US); Paredes, Leopoldo, Pembroke Pines, Florida 33029 (US)
(74) Representative: Grünecker Patent- und Rechtsanwälte PartG mbB

(56) References cited:
- EP-A1- 1 944 663
- EP-A1- 2 278 420
- DE-A1- 10 231 675
- US-A1- 2010 082 310
- US-A1- 2014 052 294

## Description

### TECHNICAL BACKGROUND

Simulation of industrial equipment can be essential in designing, prototyping, and demonstrating the different design options to engineers, customers, and other interested parties. Such simulations can be utilized to emulate virtualized operation of their corresponding physical devices over time, and may be further used in providing visual representations of the various simulated devices. In some examples, simulation and modeling applications may be used to define parameters for simulated mechanical components. These parameters ensure that the emulated equipment performs in the same manner during a simulation as can be expected for their real-world counterparts.

In addition to the physical industrial equipment that provides the mechanical functionality to perform various industrial operations, controller systems are also essential components of an industrial automation environment. Industrial controller systems are commonly hardware-based devices, such as a programmable logic controller (PLC), although controllers may also be emulated in software in some instances. Industrial controller systems are typically utilized to provide control instructions to physical machines to accomplish various tasks in an industrial plant, such as product manufacturing, materials handling, batch processing, supervisory control, and other industrial functions. As a result, by combining industrial machinery with the proper controller, an industrial system can be created that is capable of performing various operations.

### OVERVIEW

Systems, methods, and software to facilitate simulating machines used in industrial automation are disclosed herein. In at least one implementation, a machine model is processed to generate a simulation model of a machine. A load to apply to the simulation model of the machine is then simulated. The simulation model of the machine is executed under the load, and characteristics of mechanical components of the machine are selected to handle the load.

This Overview is provided to introduce a selection of concepts in a simplified form that are further described below in the Technical Disclosure. It should be understood that this Overview is not intended to identify key features or essential features of the claimed subject matter, nor is it intended to be used to limit the scope of the claimed subject matter.

EP 2 278420 A1 discloses automated analysis of energy consumption during a conceptual design phase of a servo drive system by determining loss constituents that when combined to create the loss associated with the servo drive system. By classifying information related to cause of loss, and a break-up of such loss to individual contributors based on type/location of loss, a design tool is disclosed that readily informs a user regarding energy losses being created or generated from a particular design. An efficiency analysis can be performed by observing an entirety of a servo-motor system and ranking the loss constituents based on predetermined criteria.

EP 1 944 663 A1 discloses systems and methods for simulating dynamic feedback control systems that include establishing a connection via a common access to a shared memory between the control system logic of a controller to be emulated and a simulation model. State data from a previous simulation associated with the control system logic and the simulation model is retrieved from memory to initialize another simulation run. The state data associated with the simulation model and the control system logic are then synchronized with a timing and control mechanism and a simulation of the controller is executed.

It is therefore the object of the present invention to provide one or more improved computer-readable storage media for simulating machines used in industrial automation, a corresponding method, and a corresponding computer apparatus.

This object is solved by the subject matter of the independent claims.

Preferred embodiments are defined by the dependent claims.

### BRIEF DESCRIPTION OF THE DRAWINGS

Many aspects of the disclosure can be better understood with reference to the following drawings.
Figure 1 is a block diagram that illustrates a computing system that may be used to facilitate simulating machines used in industrial automation.
Figure 2 is a flow diagram that illustrates an operation of a computing system in an exemplary implementation.
Figure 3 is a block diagram that illustrates a computing system comprising a cloud-based architecture to support data exchange for simulating machines used in industrial automation in an exemplary implementation.
Figure 4 is a block diagram that illustrates an operational scenario involving a computing system in an exemplary implementation.
Figure 5 is a block diagram that illustrates a computing system in an exemplary implementation.

### DETAILED DESCRIPTION

The following description and associated drawings teach the best mode of the invention. For the purpose of teaching inventive principles, some conventional aspects of the best mode may be simplified or omitted. The following claims specify the scope of the invention. Some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by claims and their equivalents.

Industrial automation environments, such as automobile manufacturing factories, food processing plants, oil drilling operations, microprocessor fabrication facilities, and other types of industrial enterprises, typically employ several machines and other equipment to carry out their business operations. For example, an industrial automation enterprise could employ machines comprising sensors, drives, pumps, filters, drills, motors, robots, mills, printers, carousels, fabrication machinery, or any other industrial automation equipment. During the design, prototyping, and testing phases of product development, these machines and other devices used in industrial automation may be simulated using computing systems to provide virtual representations to engineers and customers of the end product. These simulations typically include physical attributes, parameters, and other aspects of the machine being simulated to ensure a proper emulation is furnished by the computing system. In some examples, a user may desire to have control over a simulated device to further illustrate the functionality and operation of the device as can be expected when physically implemented. As a result, the user may prefer to attach one or more real or emulated controllers to the simulated device to demonstrate and test the different controllable operations of the device.

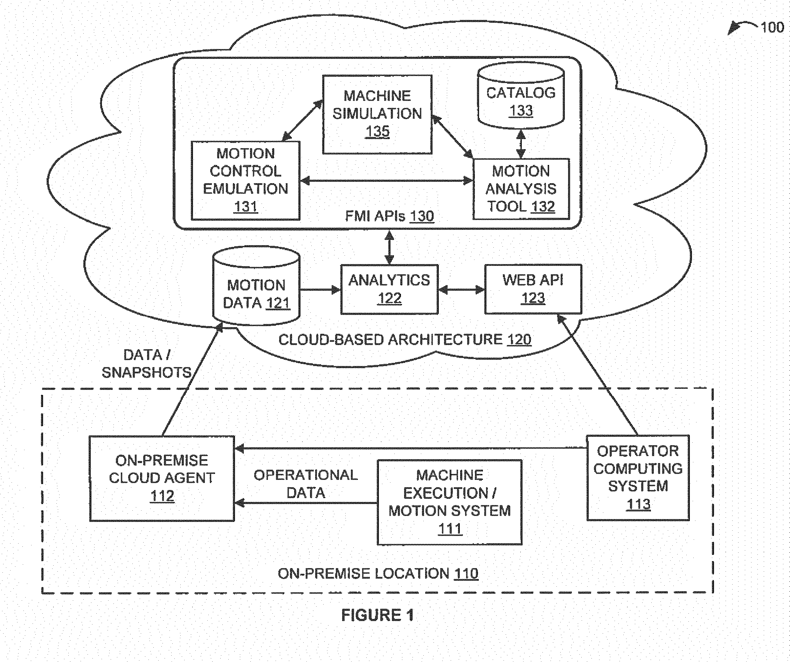

Figure 1 is a block diagram that illustrates computing system 100 that may be used to facilitate simulating machines used in industrial automation. In this implementation, computing system 100 includes an on-premise location 110 and a cloud-based architecture 120. On-premise location 110 could comprise any location where computing systems and machinery may be executed, but would typically comprise a factory floor, manufacturing facility, laboratory, research and development center, or some other kind of workspace. On-premise location 110 includes machine execution/motion system 111, on-premise cloud agent 112, and operator computing system 113. Cloud-based architecture 120 includes motion data storage system 121, analytics engine 122, web application programming interface (API) 123, and functional mock-up interface (FMI) APIs 130. The FMI APIs 130 include motion control emulation 131, motion analysis tool 132, mechanical components catalog database 133, and machine simulation 135.

Generally, computing system 100 provides for motion analysis based on high performance computing that utilizes emulation of the control program, simulation of the machine, and a set of interfaces to connect the application. The system supports advanced motion control capabilities as a service, including controller emulation, machine simulation, and motion analysis. A web portal provides for remote motion analysis configuration and management.

Data connectivity is achieved though FMI, which defines a standardized interface to be used in computer simulations to develop complex cyberphysical systems. These cyberphysical systems are represented in functional mock-up units (FMUs) that provide the functions necessary to generate the simulation. The functional mock-up units typically include an extensible markup language (XML) file comprising definitions of the variables used by the FMUs, equations used by the model, which may be defined as a set of functions, and other optional data, such as parameter tables, a user interface, and documentation which may be needed by the model, among other things.

In some examples, machine execution/motion system 111 could comprise a physical machine and its associated control system, which could comprise an industrial controller, automation controller, programmable logic controller (PLC), or any other controller used in automation control. An operator utilizes operator computing system 113 to interact with the on-premise cloud agent 112 and to interact with elements in the cloud-based architecture 120 through the web API 123.

In operation, machine execution/motion system 111 is executed and provides operational data to the on-premise cloud agent 112. For example, machine execution/motion system 111 could comprise a real physical system having a machine executing in the on-premise location 110 that produces real-time processes, such as temperature, flow, vibration, and the like, along with control data, such as proportional integral derivative (PID) signals, on/off signals, loop control signals, and the like. This data is collected by the on-premise cloud agent 112 and fed into a big data repository in the cloud environment 120. A cloud-based big data repository is represented by the motion data storage system 121 in Figure 1. In this manner, the on-premise cloud agent data collector 112 captures operational data from the machine execution/motion system 111 and provides this data in the form of snapshots to the motion data storage system 121 in the cloud-based architecture 120.

The data correlation analytics engine 122 creates a model of the on-premise process which over time achieves greater and greater accuracy as more operational data is collected and analyzed. The model of the on-premise process may then be utilized to correlate the set point (i.e., motion profile), process variables (such as the actual speed and position of the machine), and control variables (i.e., control signals) into a virtual model that represents the actual system. Data that is collected from the on-premise location 110 may also be segregated by on-premise cloud agent 112 such that different portions of the machine and process can be understood and modeled individually. The behavior of the machine can then be learned to create a model of the machine, or a library of models. This model is the result of the motion data 121 and analytics 122 combined to create the machine simulation 135. In some implementations, the machine simulation 135 could also be provided from pre-built models or from third-party simulation library vendors. The control program from the on-premise location 110 is then virtualized and executed as motion control emulation 131 in the cloud-based architecture 120.

A designer of a new machine, or an improvement to an existing machine, can then select appropriate mechanical components, such as a drive and motor, from the catalog database 133 by using the motion analysis tool 132, typically via a web interface. Then, the motor and the drive are rendered as simulation models that can be connected to the machine simulation 135 and the emulation motion control program 131 in the cloud 120. The machine simulation 135 can then be executed in the cloud 120 with the selected motor and drive to observe and predict the operational behavior and performance response. In some implementations, this machine simulation with the selected motor and drive models may be executed in the cloud 120 under a simulated load in order to determine if the selected motor and drive are suitable to handle the load.

In some implementations, machine simulation 135 may be generated from a pre-built machine simulation library provided by original equipment manufacturer (OEM) vendors or other sources. However, the mechanical components catalog 133 may still be used with a machine simulation 135 generated from the pre-built simulation library. A library of machine simulations can then be built by combining the motion data 121 and analytics 122 as described in the above techniques. Advantageously, the cloud environment 120 and the FMI APIs 130 provide the versatility to combine models from different sources. In cases where there is not a physical machine to generate motion data, the designer can leverage third party models into the sizing environment to facilitate selection of a drive and motor from the mechanical components catalog 133. A virtualized control program capable of controlling the machine simulation 135 with the selected drive and motor can then be selected from a library.

In some examples, the designer can perform the above operations by utilizing the operator computing system 113 in the on-premise location 110 through a sizing and selection dashboard, which provides a user interface into the cloud environment 120 via the web API 123. In addition, the designer can make modifications to the machine simulation 135 and the virtualized control program (i.e., motion control emulation 131) to increment the libraries. Further, the designer can completely design the control logic system or the machine using the sizing and selection methodology.

Advantageously, the cloud-based architecture 120 is utilized as the main container for the above-described techniques and functionality because the high performance computing provided by the cloud 120 may be leveraged, thereby avoiding whatever limitations may be introduced by the server hardware at the on-premise location 110. In addition, the deployment of big data repositories in the cloud 120 as the main collector of motion data, as represented by motion data storage system 121 in Figure 1, provides for a massive, robust, remote storage solution. Finally, by correlating the motion profile, process variables, and control variables, a virtual model of the system may be created that may be used to represent the actual system.

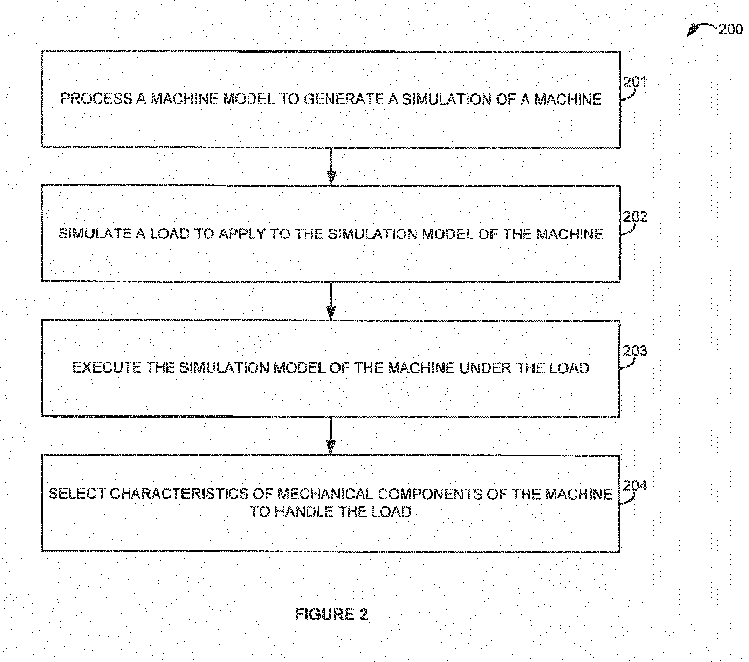

Figure 2 is a flow diagram that illustrates an operation 200 of computing system 100 in an exemplary implementation. The operation 200 shown in Figure 2 may also be referred to as simulation process 200 herein. The steps of operation 200 are indicated below parenthetically. The following discussion of simulation process 200 will proceed with reference to computing system 100 of Figure 1 in order to illustrate its operations, but note that the details provided in Figure 1 are merely exemplary and not intended to limit the scope of simulation process 200 to the specific implementation shown in Figure 1.

Simulation process 200 may be employed to operate computing system 100 to facilitate simulating machines used in industrial automation. As shown in the operational flow of simulation process 200, computing system 100 processes a machine model to generate a simulation of a machine (201). Typically, the machine simulation 135 comprises definitions for a virtual representation of at least a portion of a machine used in an industrial automation environment. For example, the machine simulation 135 could define the design and parameters of an entire robot, or could define an individual component of the robot, such as an arm joint, drive motor, articulation mechanism, or some other portion of the robot. In some examples, the machine simulation 135 could include information for rendering a three dimensional visualization of the machine, or at least a portion thereof.

The machine model that is used to generate the machine simulation 135 could be provided in a number of ways. In at least one implementation, the machine model may be generated based on analyzing motion of a physical model of the machine operating in physical space. For example, data taken from the operation of a real, physical machine, such as the operational data generated by machine execution/motion system 111 in the on-premise location 110 as shown in Figure 1, may be collected and analyzed to create the machine model. The operational data of the machine that is collected in motion data storage system 121 may then be combined with the data correlation analytics engine 122 to generate a machine model which may then be used to generate a simulation 135 of the machine. In another implementation, the machine model may be provided in a pre-built machine simulation library from an OEM vendor, machine manufacturer, or any other source, and these machine model libraries may be used to generate the machine simulation 135. In some examples, processing the machine model to generate the simulation model of the machine could comprise analyzing a motion profile of the machine model to generate the simulation model of the machine. Other techniques of processing a machine model to generate a simulation 135 of a machine are possible and within the scope of this disclosure.

Computing system 100 then simulates a load to apply to the simulation model of the machine (202). In some examples, the load could comprise inertia, friction, and/or any other measure of physical resistance. Additionally, the load could comprise thermal emissions, vibrational energy, energy consumption, and the like. In some implementations, the load could be simulated based on observations of a real load applied to the execution of a real, physical machine operating in a physical environment. In situations where a new machine is being simulated for testing and design purposes that does not yet physically exist, a similar machine that does exist may be used to estimate the load that should be simulated and applied to the simulation model of the machine.

The simulation model of the machine is then executed under the load (203). Typically, in order to execute the simulation model of the machine under the load, an industrial controller system may be used to control an operation of the simulation model of the machine under the load. In some examples, the industrial controller system could comprise an emulated industrial controller implemented in software. By executing the machine simulation 135 under the simulated load, the simulation provides a better representation of how the machine will operate under actual conditions in the real, physical world. In this manner, the behavior and performance response of the simulation model of the machine operating under the simulated load may be analyzed.

Characteristics of mechanical components of the machine are then selected to handle the load (204). In some examples, the characteristics of the mechanical components of the machine could comprise a power level of a motor, a gear ratio of a drive, and other characteristics of mechanical components that may be used in the machine. Based on the performance of the machine simulation under the simulated load, the mechanical components that have the appropriate characteristics to satisfy the load may be selected from the catalog database 133. As discussed above, the load could also include thermal properties, vibrational energy, power consumption, and other considerations, and the mechanical components of the machine may be selected to address these concerns as well. After the appropriate motor, drive, and/or other components are selected from the catalog 133, the motor and the drive may be rendered as simulation models that can be connected to the machine simulation 135 and the motion control emulation 131 in the cloud 120. The machine simulation 135 can then be executed in the cloud 120 under the simulated load with the selected motor and drive to observe the new operational behavior and performance response in order to determine if the selected motor and drive are suitable to handle the load. Advantageously, this process may be repeated in order to fine-tune the selection of the mechanical components of the machine to achieve a more precise simulation model of the machine.

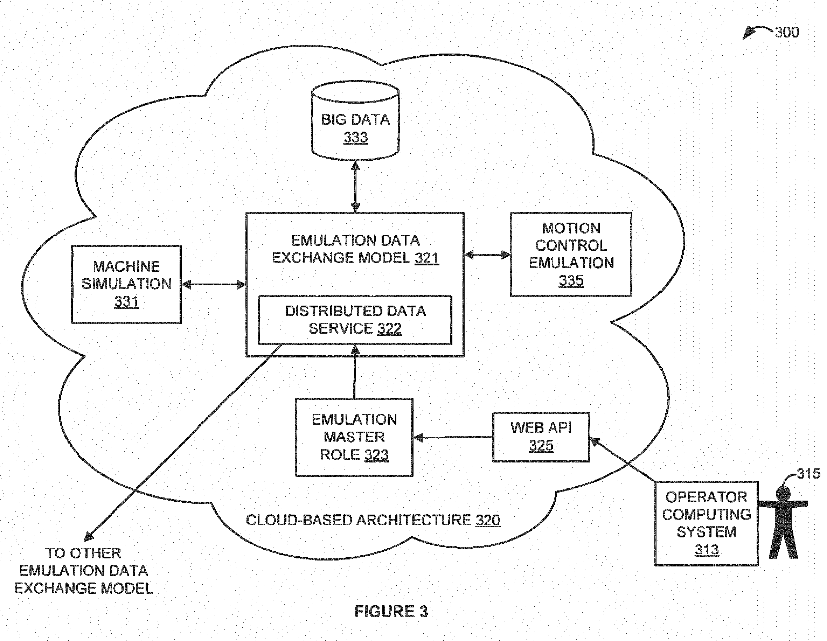

Figure 3 is a block diagram that illustrates computing system 300 comprising a cloud-based architecture 320 to support data exchange for simulating machines used in industrial automation in an exemplary implementation. Computing system 300 includes operating computing system 313 and cloud-based architecture 320. Cloud-based architecture 320 includes emulation data exchange model 321, emulation master role 323, web API 325, machine simulation 331, big data repository 333, and motion control emulation 335. Emulation data exchange model 321 includes distributed data service 322.

In operation, operator 315 utilizes operator computing system 313 to interact with elements in the cloud-based architecture 320 through the web API 325. Typically, physical machines are operated in a manufacturing plant, production facility, or the like. The operation of the machines produces real-time processes, such as temperature, flow, vibration, and the like, along with control data, such as proportional integral derivative (PID) signals, on/off signals, loop control signals, and the like. This operational data is typically collected by an on-premise cloud agent and fed into a big data repository 333 in the cloud environment 320.

The emulation data exchange model 321 is used to connect controller tags from the motion control emulation 335 to the machine simulation 331. In this example, the motion control emulation 335 comprises a virtual controller emulator, such as RSLogix^{™} Emulate 5000 provided by Rockwell Automation, Inc. To connect the output signals of the emulated motion controller 335 to the machine simulation model 331, an interface is established between the simulation model 331 and the emulated motion controller 335. To this end, the emulation data exchange model 321 will set up an interface between input/output (I/O) signals of the emulated motion controller 335 with the machine simulation model 331. The interface established by the emulation data exchange model 321 enables connectivity and data exchange in a bidirectional manner between the machine simulation model 331 and the emulated controller 335. In this example, the emulation data exchange model 321 uses a virtual controller emulator such as RSLogix^{™} Emulate 5000 to encapsulate the control programs. The controller emulator 335 mimics the operation of an industrial automation controller, such as a ControlLogix^{®} programmable logic controller (PLC) provided by Rockwell Automation, Inc., but emulated in software. The motion control emulation 335 transfers data to the machine simulation 331 using output tags and receives data from the simulation 331 using input tags.

The emulation data exchange model 321 hosts the application-level information for connecting the virtual controller 335 with the simulation model 331, and coordinates the input and output tags for data exchange. The emulation master role 323 uses FMI to coordinate communication between the FMUs. Underneath the emulation data exchange model 321, the emulated controllers 335 and their respective communications are coordinated with the machine simulation 331.

In some implementations, emulation data exchange model 321 provides distributed communication connectivity services for connecting the communicating parts in the controller side of the spectrum. In this example, this distributed communication connectivity is achieved by a distributed data service (DDS) 322 within the emulation data exchange model 321. DDS 322 comprises a networking middleware that facilitates network programming by implementing a publish and subscribe model for sending and receiving data, events, and commands between nodes, enabling interoperable and scalable data exchanges between the publishers and subscribers. Advantageously, DDS 322 is able to handle message delivery transparently, without requiring intervention from applications executing on different nodes.

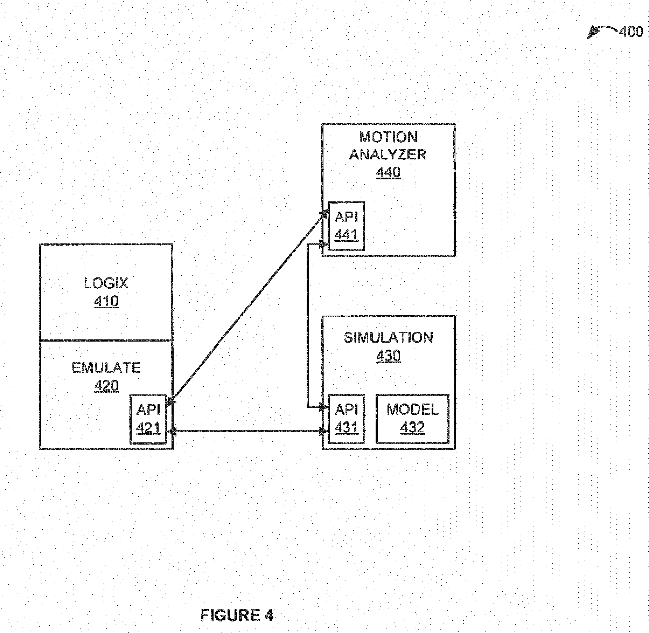

Referring now to Figure 4, Figure 4 is a block diagram that illustrates an operational scenario involving computing system 400 in an exemplary implementation. Computing system 400 includes logix 410, emulate 420, simulation 430, and motion analyzer 440. Emulate 420 includes API 421. Simulation 430 includes API 431 and simulation model 432. Motion analyzer 440 includes API 441. API 421 and API 431 are linked in bi-directional communication, as are API 421 and API 441. Likewise, API 431 and API 441 are also linked in bi-directional communication. In this implementation, API 421 of emulate 420 provides a public interface API. In accordance with the architecture shown in Figure 4, an integration is established between motion analyzer 440 to simulation 430, emulate 420 to simulation 430, and emulate 420 to motion analyzer 440.

Motion analyzer 440 comprises profiles of motors and drives that are available for selection when designing a machine, such as a robot that may be used in a manufacturing process. However, because the profiles of motors and drives are ideal, they are missing most of the configurations of the gains, and several other aspects of these mechanical components may be off when performing the selection. To address this concern, the power of the motion analyzer tool 440 may be augmented to become a more comprehensive virtual design engineering tool that will play in motion and may be used to help validate the control algorithm. In addition, all of the gain elements and configurations will be made available, which provides for the rest of the I/O branch.

In one exemplary implementation, a test simulation can be run with up to six axes of motion, and these axes may be combined into one singular model and their movement and operation synchronized without using the motion analyzer tool 440. After the axes are combined and synchronized, a instruction for the motion analyzer 440 may be executed and by analyzing the motion of the drive and motor the motion analyzer 440 will output the command position, command velocity, and command acceleration, which may be fed back into the model to produce the response profile of the machine in motion. This configuration data is then transferred to the emulate tool 420 through the API 421.

The configuration data received by the emulate tool 420 includes the drive and motor configurations and motion profiles, along with models for simulating a load on the drive and motor, such as models of inertia, friction, thermal output, vibrational energy, power consumption, and any other real-world physical constraints that the designer may want to simulate. Through the API 441 in the motion analyzer 440, the motion analyzer 440 becomes an engine during execution of the simulation under the load. In this manner, the motion analyzer 440 may be used to facilitate selecting the appropriately sized drive and motor for the machine based on evaluating how the selected motor and drive performs under the simulated load and enables the designer to fine-tune the configuration of the drive and motor.

The emulate tool 421 serves to emulate an industrial controller that provides control instructions to drive the motion of the machine by controlling the drive, motor, and other mechanical components. For example, the emulated controller 420 includes motion instructions needed to control the machine simulation 430. The controller emulator 420 executes various command instructions and connects multiple axes of motion of the machine simulation 430 to the simulation session through the API 421. This emulated controller 421 may be specially configured by the machine designer to work in harmony with the machine being designed. Ultimately, the configuration of the emulated controller 421 may be used to create a physical controller device that will perform the operation of the real, physical machine.

In one exemplary workflow, a controller emulation 420 may be executed to control the machine simulation 430. In this scenario, the controller emulation API 421 may be utilized to direct control data through to the machine simulation 430, and may also utilize a specialized motion analyzer API 441 to analyze the motion of the simulated machine as operated under the control of the emulated controller 420. The emulator API 421 may be leveraged to connect the axes of the various machine components to the simulation 430.

In some implementations, the configuration of the emulated controller 420 may be imported and/or exported by the emulate API 421 through the motion analyzer API 441. The motion analyzer 440 is capable of handling multi-axis analysis and can generate and output configuration data for the control program to be used by the emulated controller 420 for driving the various axis of motion of the machine. The motion analyzer 440 is also programmed with the capability of utilizing and interacting with the emulator 420 API 421 and the simulation 430 API 431.

In some circumstances, a machine designer may want to simulate the operation of a machine with a motor, but has not yet selected a particular motor for the job. In this case, an implementation of a set of libraries that can be used to simulate the operation of various available motors and drives may be provided to the designer, along with an engine to configure the parameters from these libraries. The controller emulator 420 is then provided with the motion profile, the axes for the machine, and the motors. The axis configuration needs to be configured with the ratio inertia, the gains, and other parameters that come from motion analyzer 440.

The instructions for the emulated controller 420 that will control and execute the machine simulation 430 need to be coordinated and translated through the emulator API 421 to output the command position, command velocity, and command acceleration. These commands may then be fed back into the model 432 to output the response profile. The instructions will take the actual position of the machine components to produce angular position, and the angular position may be processed to produce the necessary torque that the selected motor should be capable of providing. The torque can then be provided as an input to the drive, which is a function of the emulator program 420. This configuration is then transferred to the emulator 420, and the motion analyzer 440 and the emulator 420 connect the axes of the machine to the simulation 430 through the API 431. In the configuration phase, the motion analyzer 440 passes catalog information about the drive and motor to the model 432. In addition the catalog information provided to the model 432 by the motion analyzer tool 440 could include information about a transmission, differential, gear ratios, and other mechanical components that may be used in a motorized driveline. The control program is then executed by the controller emulator 420 to control the motion and operation of the machine simulation 430, which provides a means to validate the selection of the motor and drive to ensure the optimum mechanical components are selected having suitable characteristics to handle the load.

In the configuration phase, the designer operates the system to pass instructions between the emulated controller 420 and the machine simulation 430, and all the parameters pertaining to feedback and drive status are implicitly a part of the control program executed by the emulator 420. In addition, the designer can edit the motion profiles using an editor provided by the motion analyzer tool 440, and this edited motion profile may then be propagated from the motion analyzer 440 to the controller emulator 420.

During the runtime phase, where the machine simulation 430 is actually executed under the control of the controller emulator 420, the command position, velocity, and acceleration are provided by the emulator 420 to drive the motion of the machine, and actual values may be provided in feedback, such as load speed and the like. The runtime environment outputs the motion profile of the executed simulation 430 under a load, and this motion profile can be used along with the core algorithms from the motion analyzer 440. During runtime, the simulation 430 takes a complete motion profile and sends an encapsulated response to the motion analyzer 440 in the form of angular velocities of the motion of the simulated machine. Through the API 441 in the motion analyzer 440, the motion analyzer 440 plays the role of an engine in runtime loop mode, which performs an evaluation and cycles back to fine-tune the configuration of the selected drive and motor, effectively acting as a sizing and selection tool. Tags are also identified during simulation 430 runtime execution, where tags in the motion analyzer 440 have corresponding tags in the control program of the controller emulator 420 and vice versa.

When running the simulation 430, data related to the operation and performance of the motor, drive, and other mechanical components of the machine is collected and passed back to the motion analyzer 440, which provides the user with a better idea of how these components are operating and whether they are suitable for the application. The drive and motor configuration can be derived from motion profiles and defined through a logix design tool 410. To simulate the load, models that define inertia, friction, thermal output, power consumption, and other parameters may be obtained from a library. In some examples, machine designers may have their own library of models that define various load parameters, and the APIs 421, 431, and 441 can be utilized to command the system to perform an operation. The model 432 of the machine being simulated should typically comply with these APIs 421, 431, and 441, regardless of what programming language is used to design the model 432. Data is moved from the model 432 into the motion analysis system 440 through the API 441, which can be published in some examples. Third party simulation software can also be used with the system to generate the machine model 432 and to run the simulation 430, and can work in conjunction with logix 410 and motion analyzer 440. Finally, an emulation session 420 that provides emulated controller instructions to drive the motion of the simulation 430 may utilize the API 421 to transfer control data from the controller emulator 420 to the simulation 430 via the simulation API 431, and may also receive data from the motion analyzer 440 API 441, In this manner, a machine designer can determine and select the appropriate size motor and drive that are capable of moving the machine under a simulated load, thereby providing a more accurate representation of how a physical prototype of the machine will operate in the real world.

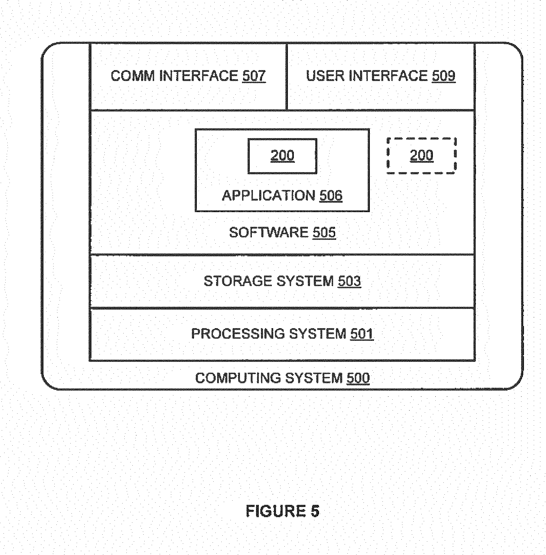

Figure 5 is a block diagram that illustrates computing system 500 in an exemplary implementation. Computing system 500 provides an example of computing system 100 or any system that may be used to facilitate simulating machines used in industrial automation, although other systems capable of performing the techniques disclosed herein could use alternative configurations. Computing system 500 is representative of a computing system that may be employed in any computing apparatus, system, or device, or collections thereof. For example, computing system 500 may be employed in server computers, cloud computing platforms, data centers, any physical or virtual computing machine, and any variation or combination thereof. In addition, computing system 500 may be employed in desktop computers, laptop computers, tablets, smartphones, or the like.

Computing system 500 includes processing system 501, storage system 503, software 505, communication interface 507, and user interface 509. Processing system 501 is operatively coupled with storage system 503, communication interface 507, and user interface 509. Processing system 501 loads and executes software 505 from storage system 503. Software 505 includes application 506 which itself includes simulation process 200. Simulation process 200 may optionally be implemented separately from application 506. When executed by computing system 500 in general, and processing system 501 in particular, software 505 directs computing system 500 to operate as described herein for simulation process 200 or variations thereof. Computing system 500 may optionally include additional devices, features, or functionality not discussed here for purposes of brevity.

Computing system 500 may be representative of any computing apparatus, system, or systems on which application 506 and simulation process 200 or variations thereof may be suitably implemented. Examples of computing system 500 include mobile computing devices, such as cell phones, tablet computers, laptop computers, notebook computers, and gaming devices, as well as any other type of mobile computing devices and any combination or variation thereof. Note that the features and functionality of computing system 500 may apply as well to desktop computers, server computers, and virtual machines, as well as any other type of computing system, variation, or combination thereof.

Referring still to Figure 5, processing system 501 may comprise a microprocessor and other circuitry that retrieves and executes software 505 from storage system 503. Processing system 501 may be implemented within a single processing device but may also be distributed across multiple processing devices or sub-systems that cooperate in executing program instructions. Examples of processing system 501 include general purpose central processing units, application specific processors, and logic devices, as well as any other type of processing device, combinations, or variations thereof.

Storage system 503 may comprise any non-transitory computer-readable media or storage media readable by processing system 501 and capable of storing software 505, such as a disk drive, flash drive, data storage circuitry, or some other hardware memory apparatus. In some examples, a computer apparatus could comprise storage system 503 and operating software 505. Storage system 503 may include volatile and nonvolatile, removable and non-removable media implemented in any method or technology for storage of information, such as computer readable instructions, data structures, program modules, or other data. Storage system 503 may be implemented as a single storage device but may also be implemented across multiple storage devices or sub-systems co-located or distributed relative to each other - including devices in different geographic areas. Storage system 503 may also be embedded in various types of equipment. Storage system 503 may comprise additional elements, such as a controller, capable of communicating with processing system 501. Examples of storage media include random access memory, read only memory, magnetic disks, optical disks, flash memory, virtual memory and non-virtual memory, magnetic cassettes, magnetic tape, magnetic disk storage or other magnetic storage devices, or any other medium which can be used to store the desired information and that may be accessed by an instruction execution system, as well as any combination or variation thereof, or any other type of storage media. In no case is the storage media a propagated signal.

In operation, processing system 501 loads and executes portions of software 505 such as simulation process 200, in order to operate as described herein. In particular, software 505 may be implemented in program instructions and among other functions may, when executed by computing system 500 in general or processing system 501 in particular, direct computing system 500 or processing system 501 to utilize an application programming interface (API) to establish at least a communication link between a simulation model created in a simulation application and an industrial controller system outside of the simulation model, wherein the simulation model comprises definitions for a virtual representation of at least a portion of a machine used in an industrial automation environment, and exchange data between the industrial controller system and the simulation model over the communication link. Software 505 may include additional processes, programs, or components, such as operating system software or other application software. Examples of operating systems include Windows^{®}, iOS^{®}, and Android^{®}, as well as any other suitable operating system. Software 505 may also comprise firmware or some other form of machine-readable processing instructions executable by processing system 501.

In general, software 505 may, when loaded into processing system 501 and executed, transform computing system 500 overall from a general-purpose computing system into a special-purpose computing system customized to facilitate simulating machines used in industrial automation as described herein for each implementation. Software 505 may also transform the physical structure of storage system 503. The specific transformation of the physical structure may depend on various factors in different implementations of this description. Examples of such factors may include, but are not limited to, the technology used to implement the storage media of storage system 503, whether the computer-storage media are characterized as primary or secondary storage, and the like. For example, if the computer-storage media are implemented as semiconductor-based memory, software 505 may transform the physical state of the semiconductor memory when the software is encoded therein. For example, software 505 may transform the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate this discussion.

Communication interface 507 may include communication connections and devices that allow for communication between computing system 500 and other computing systems (not shown) or services, over a communication network or collection of networks. Examples of connections and devices that together allow for inter-system communication may include network interface cards, antennas, power amplifiers, RF circuitry, transceivers, and other communication circuitry. The aforementioned network, connections, and devices are well known and need not be discussed at length here.

User interface 509 may include a voice input device, a touch input device for receiving a gesture from a user, a motion input device for detecting non-touch gestures and other motions by a user, and other comparable input devices and associated processing elements capable of receiving user input from a user. Output devices such as a display system, speakers, haptic devices, and other types of output devices may also be included in user interface 509. The aforementioned user input devices are well known in the art and need not be discussed at length here. User interface 509 may also include associated user interface software executable by processing system 501 in support of the various user input and output devices discussed above. Separately or in conjunction with each other and other hardware and software elements, the user interface software and devices may provide a graphical user interface, a natural user interface, or any other kind of user interface.

The functional block diagrams, operational sequences, and flow diagrams provided in the Figures are representative of exemplary architectures, environments, and methodologies for performing novel aspects of the disclosure. While, for purposes of simplicity of explanation, methods included herein may be in the form of a functional diagram, operational sequence, or flow diagram, and may be described as a series of acts, it is to be understood and appreciated that the methods are not limited by the order of acts, as some acts may, in accordance therewith, occur in a different order and/or concurrently with other acts from that shown and described herein. For example, those skilled in the art will understand and appreciate that a method could alternatively be represented as a series of interrelated states or events, such as in a state diagram. Moreover, not all acts illustrated in a methodology may be required for a novel implementation.

The above description and associated drawings teach the best mode of the invention. The following claims specify the scope of the invention. Some aspects of the best mode may not fall within the scope of the invention as specified by the claims. Also, while the preceding discussion describes embodiments employed specifically in conjunction with the monitoring and analysis of industrial processes, other applications, such as the mathematical modeling or monitoring of any man-made or naturally-existing system, may benefit from use of the concepts discussed above. Further, those skilled in the art will appreciate that the features described above can be combined in various ways to form multiple variations of the invention. As a result, the invention is not limited to the specific embodiments described above, but only by the following claims.

## Claims

1. One or more computer-readable storage media having program instructions stored thereon to facilitate simulating machines used in industrial automation, wherein the program instructions, when executed by a computing system (100), direct the computing system to at least:
process (201) a machine model (432) to generate a simulation (430) of a machine (111);
simulate (202) a load to apply to the simulation (430) of the machine (111); and
execute (203) the simulation (430) of the machine (111) under the load,
wherein the program instructions direct the computing system (100) to execute an industrial controller system to control an operation of the simulation (430) of the machine (111) under the load, wherein the industrial controller system comprises an emulated industrial controller (420) implemented in software,
wherein the control program is executed by the emulated industrial controller (420) to control the operation of the simulation (430) of the machine (111), wherein an application programming interface, API, (421) of the emulated industrial controller (420) is utilized to direct control data to the simulation (430) of the machine (111), **characterized in that**
a motion analyzer (440) generates and outputs configuration data for a control program to be used by the emulated industrial controller (420), wherein the configuration data includes drive and motor configurations, one or more motion profiles, and one or more models for simulating (202) the load on the drive and the motor.

2. The one or more computer readable media of claim 1 wherein, to process (201) the machine model (432) to generate the simulation (430)of the machine (111), the program instructions direct the computing system (100) to analyze the one or more motion profiles of the machine model (432) to generate the simulation of the machine.

3. The one or more computer readable media of claim 1 wherein the program instructions further direct the computing system (100) to generate the machine model (432) based on analyzing motion of a physical model of the machine operating in physical space.

4. The one or more computer readable media of claim 1 wherein the load comprises inertia and friction.

5. A method (200) of operating a computing system (100) to facilitate simulating machines used in industrial automation, the method comprising:
processing (201) a machine model (432) to generate a simulation (430) of a machine (111);
simulating (202) a load to apply to the simulation (430) of the machine (111); and
executing (203) the simulation (430) of the machine (111) under the load,
wherein executing the simulation comprises executing an industrial controller system to control an operation of the simulation (430) of the machine (111) under the load, wherein the industrial controller system comprises an emulated industrial controller (420) implemented in software,
wherein the control program is executed by the emulated industrial controller (420) to control the operation of the simulation (430) of the machine (111), wherein an application programming interface, API, (421) of the emulated industrial controller (420) is utilized to direct control data to the simulation (430) of the machine (111), **characterized in that**
a motion analyzer (440) generates and outputs configuration data for a control program to be used by the emulated industrial controller (420), wherein the configuration data includes drive and motor configurations, one or more motion profiles, and one or more models for simulating (202) the load on the drive and the motor.

6. The method (200) of claim 5 wherein processing (201) the machine model (432) to generate the simulation (430) of the machine (111) comprises analyzing the one or more motion profiles of the machine model to generate the simulation of the machine.

7. The method (200) of claim 5 further comprising generating the machine model (432) based on analyzing motion of a physical model of the machine (111) operating in physical space.

8. The method (200) of claim 5 wherein the load comprises inertia and friction.

9. A computer apparatus to operate a computing system (100) to facilitate simulating machines used in industrial automation, the apparatus comprising:
software instructions configured, when executed by the computing system, to direct the computing system to:
process (201) a machine model (432) to generate a simulation (430) of a machine (111),
simulate (202) a load to apply to the simulation (430) of the machine (111), and
execute (203) the simulation (430) of the machine (111) under the load,
wherein the software instructions are configured to direct the computing system to execute an industrial controller system to control an operation of the simulation (430) of the machine (111) under the load, wherein the industrial controller system comprises an emulated industrial controller (420) implemented in software,
wherein the control program is executed by the emulated industrial controller (420) to control the operation of the simulation (430) of the machine (111), wherein an application programming interface, API, (421) of the emulated industrial controller (420) is utilized to direct control data to the simulation (430) of the machine (111); and
at least one non-transitory computer-readable storage medium storing the software instructions,
**characterized in that**
a motion analyzer (440) generates and outputs configuration data for a control program to be used by the emulated industrial controller (420), wherein the configuration data includes drive and motor configurations, one or more motion profiles, and one or more models for simulating (202) the load on the drive and the motor.

10. The computer apparatus of claim 9 wherein the software instructions configured to direct the computing system (100) to process (201) the machine model (432) to generate the simulation (430) of the machine (111) comprises the software instructions configured to direct the computing system to analyze the one or more motion profiles of the machine model to generate the simulation model of the machine; or
wherein the software instructions further direct the computing system to generate the machine model based on analyzing motion of a physical model of the machine operating in physical space; or
wherein the load comprises inertia and friction.

## Patentansprüche

1. Ein oder mehrere computerlesbares/computerlesbare Speichermedium/Speichermedien mit darauf gespeicherten Programmanweisungen, mit denen Simulieren in Industrieautomatisierung eingesetzter Maschinen ermöglicht wird, wobei die Programmanweisungen, wenn sie von einem Computersystem (100) ausgeführt werden, das Computersystem anweisen, wenigstens durchzuführen:
Verarbeiten (201) eines Maschinenmodells (432) zum Generieren einer Simulation (430) einer Maschine (111);
Simulieren (202) einer Last zum Anwenden auf die Simulation (430) der Maschine (111); sowie
Ausführen (203) der Simulation (430) der Maschine (111) unter der Last,
wobei die Programmanweisungen das Computersystem (100) anweisen, ein Industrie-Steuerungssystem zum Steuern eines Betriebes der Simulation (430) der Maschine (111) unter der Last auszuführen, und das Industrie-Steuerungssystem einen in Software implementierten emulierten Industrie-Controller (420) umfasst,
und das Steuerungsprogramm durch den emulierten Industrie-Controller (420) ausgeführt wird, um den Betrieb der Simulation (430) der Maschine (111) zu steuern, wobei eine Anwendungs-Programmschnittstelle (API) (421) des emulierten Industrie-Controllers (420) eingesetzt wird, um Steuerungsdaten zu der Simulation (430) der Maschine (111) zu leiten,
**dadurch gekennzeichnet, dass**
eine Bewegungs-Analysiereinrichtung (440) Konfigurationsdaten für ein durch den emulierten Industrie-Controller (420) einzusetzendes Steuerungsprogramm generiert und ausgibt, wobei die Konfigurationsdaten Antriebs- und Motorkonfigurationen, ein oder mehrere Bewegungsprofil/e sowie ein oder mehrere Modell/e zum Simulieren (202) der Last an dem Antrieb und dem Motor einschließen.

2. Ein oder mehrere computerlesbares/computerlesbare Medium/Medien nach Anspruch 1, wobei, um das Maschinenmodell (432) zum Generieren der Simulation (430) der Maschine (111) zu verarbeiten (201), die Programmanweisungen das Computersystem (100) anweisen, das eine oder die mehreren Bewegungsprofil/e des Maschinenmodells (432) zu analysieren, um die Simulation der Maschine zu generieren.

3. Ein oder mehrere computerlesbares/computerlesbare Medium/Medien nach Anspruch 1, wobei die Programmanweisungen das Computersystem (100) des Weiteren anweisen, das Maschinenmodell (432) basierend auf Analyse von Bewegung eines im physikalischen Raum arbeitenden physikalischen Modells der Maschine zu generieren.

4. Ein oder mehrere computerlesbares/computerlesbare Medium/Medien nach Anspruch 1, wobei die Last Trägheit und Reibung umfasst.

5. Verfahren (200) zum Betreiben eines Computersystems (100), mit dem Simulieren in Industrieautomatisierung eingesetzter Maschinen ermöglicht wird, wobei das Verfahren umfasst:
Verarbeiten (201) eines Maschinenmodells (432) zum Generieren einer Simulation (430) einer Maschine (111);
Simulieren (202) einer Last zum Anwenden auf die Simulation (430) der Maschine (111); sowie
Ausführen (203) der Simulation (430) der Maschine (111) unter der Last,
wobei Ausführen der Simulation Ausführen eines Industrie-Steuerungssystems zum Steuern eines Betriebes der Simulation (430) der Maschine (111) unter der Last umfasst und das Industrie-Steuerungssystem einen in Software implementierten emulierten Industrie-Controller (420) umfasst,
und das Steuerungsprogramm durch den emulierten Industrie-Controller (420) ausgeführt wird, um den Betrieb der Simulation (430) der Maschine (111) zu steuern, wobei eine Anwendungs-Programmschnittstelle (API) (421) des emulierten Industrie-Controllers (420) eingesetzt wird, um Steuerungsdaten zu der Simulation (430) der Maschine (111) zu leiten,
**dadurch gekennzeichnet, dass**
eine Bewegungs-Analysiereinrichtung (440) Konfigurationsdaten für ein durch den emulierten Industrie-Controller (420) einzusetzendes Steuerungsprogramm generiert und ausgibt, wobei die Konfigurationsdaten Antriebs- und Motorkonfigurationen, ein oder mehrere Bewegungsprofil/e sowie ein oder mehrere Modell/e zum Simulieren (202) der Last an dem Antrieb und dem Motor einschließen.

6. Verfahren (200) nach Anspruch 5, wobei Verarbeiten (201) des Maschinenmodells (432) zum Generieren der Simulation (430) der Maschine (111) Analysieren des einen oder der mehreren Bewegungsprofils/e des Maschinenmodells zum Generieren der Simulation der Maschine umfasst.

7. Verfahren (200) nach Anspruch 5, das des Weiteren Generieren des Maschinenmodells (432) basierend auf Analyse von Bewegung eines im physikalischen Raum arbeitenden physikalischen Modells der Maschine (111) umfasst.

8. Verfahren (200) nach Anspruch 5, wobei die Last Trägheit und Reibung umfasst.

9. Computervorrichtung zum Betreiben eines Computersystems (100), mit dem Simulieren von Maschinen ermöglicht wird, die in Industrieautomatisierung eingesetzt werden, wobei die Vorrichtung umfasst:
Software-Anweisungen, die so konfiguriert sind, dass sie, wenn sie durch das Computersystem ausgeführt werden, das Computersystem anweisen, durchzuführen:
Verarbeiten (201) eines Maschinenmodells (432) zum Generieren einer Simulation (430) einer Maschine (111),
Simulieren (202) einer Last zum Anwenden auf die Simulation (430) der Maschine (111), sowie
Ausführen (203) der Simulation (430) der Maschine (111) unter der Last,
wobei die Software-Anweisungen so konfiguriert sind, dass sie das Computersystem anweisen, ein Industrie-Steuerungssystem zum Steuern eines Betriebes der Simulation (430) der Maschine (111) unter der Last auszuführen, und das Industrie-Steuerungssystem einen in Software implementierten emulierten Industrie-Controller (420) umfasst,
und das Steuerungsprogramm durch den emulierten Industrie-Controller (420) ausgeführt wird, um den Betrieb der Simulation (430) der Maschine (111) zu steuern, wobei eine Anwendungs-Programmschnittstelle (API) (421) des emulierten Industrie-Controllers (420) eingesetzt wird, um Steuerungsdaten zu der Simulation (430) der Maschine (111) zu leiten, sowie
wenigstens ein nicht-flüchtiges, computerlesbares Speichermedium, auf dem die Software-Anweisungen gespeichert sind,
**dadurch gekennzeichnet, dass**
eine Bewegungs-Analysiereinrichtung (440) Konfigurationsdaten für ein durch den emulierten Industrie-Controller (420) einzusetzendes Steuerungsprogramm generiert und ausgibt, wobei die Konfigurationsdaten Antriebs- und Motorkonfigurationen, ein oder mehrere Bewegungsprofil/e sowie ein oder mehrere Modell/e zum Simulieren (202) der Last an dem Antrieb und dem Motor einschließen.

10. Computervorrichtung nach Anspruch 9, wobei die Software-Anweisungen, die so konfiguriert sind, dass sie das Computersystem (100) anweisen, das Maschinenmodell (432) zu verarbeiten (201), um die Simulation (430) der Maschine (111) zu generieren, die Software-Anweisungen umfassen, die so konfiguriert sind, dass sie das Computersystem anweisen, das eine oder die mehreren Bewegungsprofil/e des Maschinenmodells zu analysieren, um das Simulationsmodell der Maschine zu generieren; oder
die Software-Anweisungen das Computersystem des Weiteren anweisen, das Maschinenmodell basierend auf Analyse von Bewegung eines im physikalischen Raum arbeitenden physikalischen Modells der Maschine zu generieren; oder
wobei die Last Trägheit und Reibung umfasst.

## Revendications

1. Un ou plusieurs supports de stockage lisibles par un ordinateur sur lesquels sont stockées des instructions de programme pour permettre la simulation de machines utilisées en automatisation industrielle, dans lesquels les instructions de programme, lorsqu'elles sont exécutées par un système informatique (100), commandent au système informatique d'au moins :
traiter (201) un modèle de machine (432) pour générer une simulation (430) d'une machine (111) ;
simuler (202) une charge à appliquer à la simulation (430) de la machine (111) ; et
exécuter (203) la simulation (430) de la machine (111) sous la charge,
dans lesquels les instructions de programme commandent au système informatique (100) d'exécuter un système de contrôleur industriel pour contrôler un fonctionnement de la simulation (430) de la machine (111) sous la charge, dans lesquels le système de contrôleur industriel comprend un contrôleur industriel émulé (420) implémenté de façon logicielle,
dans lesquels le programme de contrôle est exécuté par le contrôleur industriel émulé (420) pour contrôler le fonctionnement de la simulation (430) de la machine (111), dans lesquels une interface de programmation applicative, API, (421) du contrôleur industriel émulé (420) est utilisée pour envoyer des données de contrôle à la simulation (430) de la machine (111),
**caractérisés en ce qu'**un analyseur de mouvement (440) génère et sort des données de configuration pour un programme de contrôle destiné à être utilisé par le contrôleur industriel émulé (420), dans lesquels les données de configuration comprennent des configurations de moteur et de transmission, un ou plusieurs profils de mouvement, et un ou plusieurs modèles pour simuler (202) la charge sur le moteur et la transmission.

2. Un ou plusieurs supports lisibles par un ordinateur selon la revendication 1 dans lesquels, pour traiter (201) le modèle de machine (432) afin de générer la simulation (430) de la machine (111), les instructions de programme commandent au système informatique (100) d'analyser lesdits un ou plusieurs profils de mouvement du modèle de machine (432) pour générer la simulation de la machine.

3. Un ou plusieurs supports lisibles par un ordinateur selon la revendication 1, dans lesquels les instructions de programme commandent en outre au système informatique (100) de générer le modèle de machine (432) sur base de l'analyse du mouvement d'un modèle physique de la machine fonctionnant dans un espace physique.

4. Un ou plusieurs supports lisibles par un ordinateur selon la revendication 1, dans lesquels la charge comprend l'inertie et la friction.

5. Procédé (200) de fonctionnement d'un système informatique (100) pour permettre la simulation de machines utilisées en automatisation industrielle, le procédé comprenant :
le traitement (201) d'un modèle de machine (432) pour générer la simulation (430) d'une machine (111) ;
la simulation (202) d'une charge à appliquer à la simulation (430) de la machine (111) ; et
l'exécution (203) de la simulation (430) de la machine (111) sous la charge,
dans lequel l'exécution de la simulation comprend l'exécution d'un système de contrôle industriel pour contrôler le fonctionnement de la simulation (430) de la machine (111) sous la charge, dans lequel le système de contrôleur industriel comprend un contrôleur industriel émulé (420) implémenté de façon logicielle,
dans lequel le programme de contrôle est exécuté par le contrôleur industriel émulé (420) pour contrôler le fonctionnement de la simulation (430) de la machine (111), dans lequel une interface de programmation applicative, API, (421) du contrôleur industriel émulé (420) est utilisée pour envoyer des données de contrôle à la simulation (430) de la machine (111),
**caractérisé en ce qu'**un analyseur de mouvement (440) génère et sort des données de configuration pour un programme de contrôle destiné à être utilisé par le contrôleur industriel émulé (420), dans lequel les données de configuration comprennent des configurations de moteur et de transmission, un ou plusieurs profils de mouvement, et un ou plusieurs modèles pour simuler (202) la charge sur le moteur et la transmission.

6. Procédé (200) selon la revendication 5, dans lequel le traitement (201) du modèle de machine (432) pour générer la simulation (430) de la machine (111) comprend l'analyse desdits un ou plusieurs profils de mouvement du modèle de machine pour générer la simulation de la machine.

7. Procédé (200) selon la revendication 5, comprenant en outre la génération du modèle de machine (432) sur base de l'analyse du mouvement d'un modèle physique de la machine (111) fonctionnant dans un espace physique.

8. Procédé (200) selon la revendication 5, dans lequel la charge comprend l'inertie et la friction.

9. Appareil informatique pour exécuter un système informatique (100) afin de permettre la simulation de machines utilisées en automatisation industrielle, l'appareil comprenant :
des instructions logicielles qui, lorsqu'elles sont exécutées par le système informatique, sont configurées pour commander au système informatique :
de traiter (201) un modèle de machine (432) pour générer une simulation (430) d'une machine (111),
de simuler (202) une charge à appliquer à la simulation (430) de la machine (111) ; et
d'exécuter (203) la simulation (430) de la machine (111) sous la charge,
dans lequel les instructions logicielles sont configurées pour commander au système informatique d'exécuter un système de contrôleur industriel pour commander le fonctionnement de la simulation (430) de la machine (111) sous la charge, dans lequel le système de contrôleur industriel comprend un contrôleur industriel émulé (420) implémenté de façon logicielle,
dans lequel le programme de contrôle est exécuté par le contrôleur industriel émulé (420) pour contrôler le fonctionnement de la simulation (430) de la machine (111), dans lequel une interface de programmation applicative, API, (421) du contrôleur industriel émulé (420) est utilisée pour envoyer des données de contrôle à la simulation (430) de la machine (111); et
au moins un support de stockage non volatile lisible par un ordinateur sur lequel sont stockées des instructions logicielles,
**caractérisé en ce qu'**un analyseur de mouvement (440) génère et sort des données de configuration pour un programme de contrôle destiné à être utilisé par le contrôleur industriel émulé (420), dans lequel les données de configuration comprennent des configurations de moteur et de transmission, un ou plusieurs profils de mouvement, et un ou plusieurs modèles pour simuler (202) la charge sur le moteur et la transmission.

10. Appareil informatique selon la revendication 9, dans lequel les instructions logicielles configurées pour commander au système informatique (100) de traiter (201) le modèle de machine (432) afin de générer la simulation (430) de la machine (111) comprennent les instructions logicielles configurées pour commander au système informatique d'analyser lesdits un ou plusieurs profils de mouvement du modèle de machine afin de générer le modèle de simulation de la machine ; ou
dans lequel les instructions logicielles commandent en outre au système informatique de générer le modèle de machine sur base de l'analyse du mouvement d'un modèle physique de la machine fonctionnant dans un espace physique ; ou
dans lequel la charge comprend l'inertie et la friction.
